# EUROPEAN PATENT APPLICATION

(11) **EP 1 808 985 A1**
(43) Date of publication of application: **18.07.2007**
(21) Application number: 06000636.8
(22) Date of filing: 12.01.2006
(51) Int. Cl.: H04L 12/56

(54) **Method for signaling DTX status information during repeated SACCH operation**

(71) Applicant: SIEMENS AKTIENGESELLSCHAFT, 80333 München (DE)
(72) Inventor: Hofmann, Jürgen, 86504 Merching (DE)

(57) **Abstract**

The invention relates to a method for signaling DTX status information during Repeated SACCH operation in GERAN communication systems.

A mobile station measures values assigned to a serving radio cell and assigned to neighboring radio cells. The measurement is done within a number of successive measurement periods. The measurements, assigned to a measurement period with a number N, are transmitted to the base station within the successive measurement periods numbered N+1 and N+2 each. The measured values are transmitted as part of a SACCH-information block.

The mobile station determines uplink DTX status information during each of the numbered measurement periods. A first DTX status information, which is assigned to the measurement period with the number N, is transmitted to the base station within the measurement periods numbered N+1 and N+2 each. A second DTX status information, which is assigned to a measurement period with number N-1, is also transmitted to the base station within the measurement periods numbered N+1 and N+2 each. The transmission of DTX status information is done with a Layer 1 Header of the SACCH information block.

## Description

The invention relates to a method for signaling DTX status information during Repeated SACCH operation in GERAN communication systems.

In order to improve the robustness of associated signaling channels for so called "Fullrate AMR Modes" the "Repeated Downlink FACCH" and the "Repeated SACCH" were defined and included in standard GERAN.

More details about "Repeated Downlink FACCH" can be found in paper GP-050193, "FACCH Improvements; repeated FACCH", Meeting GERAN#23, January 24th - 28th, 2005.

More details about "Repeated SACCH" can be found in paper GP-052575, "Specification of Repeated SACCH", Meeting GERAN#27, November 7th - 11th, 2005.

While standardization of "Repeated Downlink FACCH" seems to be completed, the standardization of "Repeated SACCH" is still in process.

An open problem is the interpretation of so called "uplink DTX status information" while there is "Repeated SACCH" operation in uplink direction.

Right now DTX status information is determined at a mobile station (MS), to be transmitted in uplink direction. The determination is done within a predefined time interval, known as downlink measurement period.

The mobile station measures values of an assigned serving cell within this predefined downlink measurement period. The serving cell is assigned to a serving base station, which is able to execute a radio communication to the mobile station.

As values being measured at the mobile station the RXLEV or RXQUAL values can be used, for example.

The measured values of the serving cell are transmitted to the serving base station, together with measured values assigned to neighboring or adjacent cells of the serving cell.

The transmission of the values from the mobile station to the serving base station is done according to standard 3GPP TS 45.008, for example.

For the transmission of the values a so called "normal measurement report" or an "enhanced measurement report" can be used. The measurement report is included in one SACCH information block for transmission in uplink direction.

The DTX status information is transmitted in uplink direction as part of the so called "Layer 1 Header" of the SACCH information block. This "Layer 1 Header" is updated every 480 ms, based on the periodicity of SACCH transmission.

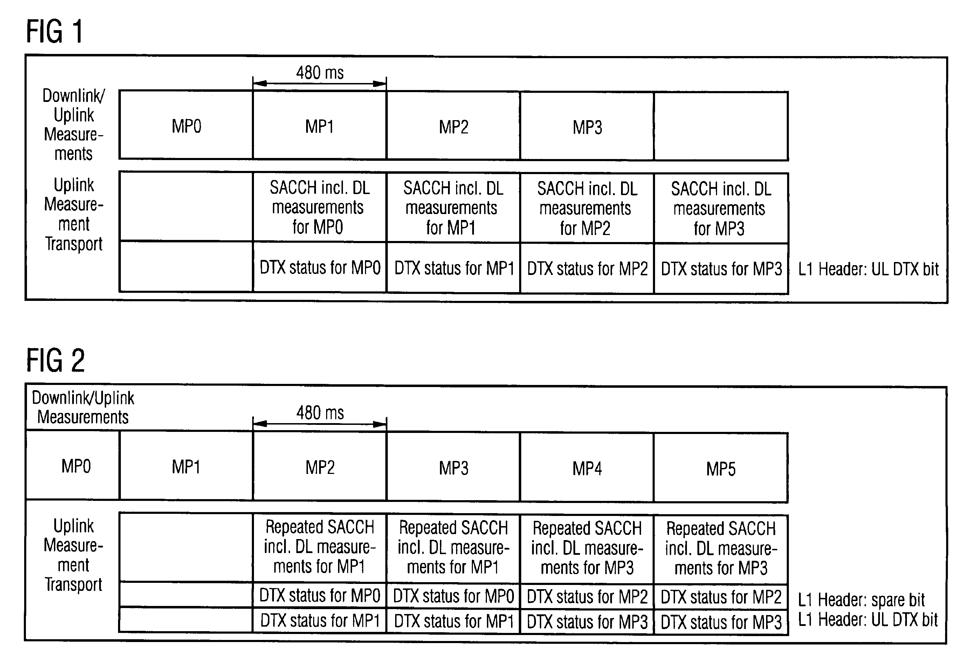

FIG 1 shows - as state of the art - a signaling of DTX status information, transmitted in uplink direction during a normal SACCH operation.

Because of the SACCH-period an update of DTX status information can be done every 480 ms at the base station.

The upper part of FIG 1 shows successive time intervals or measurement periods MP0, MP1, ..., MP3 being used for measurement of values at the mobile station, based on a downlink connection.

These time intervals or measurement periods MP0, MP1, ..., MP3 are also used for measurement of values at the base station, based on a uplink connection.

Each time interval lasts 480 ms.

The lower part of FIG 1 shows the transmission of measured values from the mobile station to the base station with help of a SACCH information block and also the transmission of DTX-status information, being part of the Layer 1 Header of the SACCH information block.

During a first time interval MP1 there is a transmission in uplink direction of a SACCH information block. The SACCH information block includes measurements, which were done during a precedent time interval MP0. The measurements describe the downlink connection during the preceding time interval MP0.

Accordingly the DTX status information of the mobile station assigned to the preceding time interval MP0 is transmitted during the first time interval MP1.

During a second time interval MP2 there is a transmission in uplink direction of a next SACCH information block. The SACCH information block includes measurements, being done during the precedent first time interval MP1. The measurements describe the downlink connection during the preceding first time interval MP1.

Accordingly the DTX status information of the mobile station assigned to the preceding first time interval MP1 is transmitted during the second time interval MP2.

This sequence of steps is repeated accordingly for subsequent time intervals MP3, MP4, ... and so on.

In case of "Repeated SACCH" operation in uplink direction, the mobile station is commanded to send measurement reports twice. For this purpose so called "SAPI 0 frames" are used.

Therefore the mobile station will send the same measurement information in adjacent SACCH information blocks in uplink direction. Consequently the same DTX status information will be reported in adjacent SACCH information blocks in uplink direction. Because of that, the DTX status information show a period of 2*480 ms for updating.

But essential functions of a GERAN communication system, for example "radio resource management, RRM" or "Transmit Power Control" or "Handover", are based on algorithms, which use a reporting period of 480 ms of DTX status information.

To modify such kind of algorithms for "Repeated SACCH" operation in uplink direction would cause high implementation efforts.

Therefore it is the purpose of the invention, to develop a improved signaling of DTX status information in uplink direction, while "Repeated SACCH" operation in uplink direction is done.

The purpose of the invention is achieved by the features of claim 1. Advantageous embodiments of the invention are subject of the dependent claims.

### The inventive method includes the following steps:

A mobile station measures values assigned to a serving radio cell and assigned to neighboring or adjacent radio cells, the measurement is done within successive measurement periods.

The measurements, being assigned to a measurement period with a number N, are transmitted to the base station within successive measurement periods, numbered N+1 and N+2 each.

The measured values are transmitted as part of a SACCH-information block.

The mobile station determines uplink DTX status information during the numbered measurement periods.

A first DTX status information, which is assigned to the measurement period with number N, is transmitted to the base station within the measurement periods, numbered N+1 and N+2 each.

A second DTX status information, which is assigned to a measurement period with number N-1, is also transmitted to the base station within the measurement periods numbered N+1 and N+2 each.

The transmission of DTX status information is done with a Layer 1 Header of the SACCH information block.

The inventive method allows the interpretation of the uplink-measurements, being done at the base station, with regard to the DTX status of the mobile station.

The inventive method allows the base station to determine if DTX is applied in uplink direction or not for each measurement period.

In an advantageous embodiment the inventive method use a spare bit of the Layer 1 - Header of the SACCH information block to signal additional DTX status information.

The inventive method results in the advantage that the base station gets DTX information for each 480 ms time interval or period, for which uplink measurements are generated.

Because of the inventive method there is no need to modify "radio resource management RRM" algorithms for "Repeated SACCH" operation in uplink direction.

As it is possible that the base station detects, if there is a normal SACCH operation or a repeated SACCH operation, there is no need to use a kind of DTX guessing.

Even if a kind of "DTX guessing" is employed in case of "Repeated SACCH operation" in uplink direction, the additional DTX information is beneficial for improving the robustness of uplink DTX status detection asides the base station.

This is useful during DTX transition periods when major parts of a measurement period are filled with blocks assigned to speech.

The invention will be described in more detail with help of figures in the succeeding part of the description.
- FIG 1: shows the signaling of DTX status information in case of normal SACCH operation, described above as state of the art, while
- FIG 2: shows a signaling of DTX status information, transmitted in uplink direction according to the invention.

The upper part of FIG 2 shows successive time intervals or measurement periods MP0, MP1, ..., MP5, used for downlink-measurements at the mobile station and for uplink measurements at the base station. Each time interval lasts 480 ms.

The lower part of FIG 2 shows the transmission of SACCH information blocks and of DTX-status information from the mobile station to the base station in case of "Repeated SACCH" operation in uplink direction.

During a first time interval MP1 the mobile station determines downlink measurements and acquires and stores DTX status information for the preceding time interval MP0 and the first time interval MP1.

During a second time interval MP2 there is a "Repeated SACCH" transmission in uplink direction of a SACCH information block. The SACCH information block includes measurements, being done during the precedent first time interval MP1. The measurements describe the downlink connection during the preceding first time interval MP1.

During the second time interval MP2 there is a transmission of a first DTX status information, assigned to the time interval MP0 and of a second DTX status information, assigned to the time interval MP1.

The first DTX status information is signaled with the "spare bit" in the "Layer 1 Header" of the SACCH, while the second DTX status information is signaled with the "UL DTX Bit", used in the "Layer 1 Header" of the SACCH to indicate the uplink DTX status related to the time interval of the downlink measurement report, i.e. MP1.

Accordingly there is a transmission during a third time interval MP3, where the SACCH information block in uplink direction is a copy of the one sent during the second time interval MP2. It includes measurements, being done during the first time interval MP1. The measurements describe the downlink connection during the first time interval MP1.

It also includes the transmission of a first DTX status information, assigned to the time interval MP0 and of a second DTX status information, assigned to the time interval MP1. The first DTX status information is signaled with the "spare bit" in the "Layer 1 Header" of the SACCH, while the second DTX status information is signaled with the "UL DTX Bit", used in the "Layer 1 Header" of the SACCH to indicate the uplink DTX status related to the time interval of the downlink measurement report, i.e. MP1.

During a fourth time interval MP4 there is a "Repeated SACCH" transmission in uplink direction of a SACCH information block, including measurements being done during the third time interval MP3. The measurements describe the downlink connection during the third time interval MP3.

During the fourth time interval MP4 there is a transmission of a first DTX status information, assigned to the time interval MP2 and of a second DTX status information, assigned to the time interval MP3.

The first DTX status information is signaled with the "spare bit" in the "Layer 1 Header" of the SACCH, while the second DTX status information is signaled with the "UL DTX Bit", used in the "Layer 1 Header" of the SACCH to indicate the uplink DTX status related to the time interval of the downlink measurement report, i.e. MP3.

Accordingly there is a transmission during a fifth time interval MP5, where the SACCH information block in uplink direction is a copy of the one sent during the fourth time interval MP4. It includes measurements, being done during the third time interval MP3. The measurements describe the downlink connection during the third time interval MP3.

It also includes the transmission of a first DTX status information, assigned to the time interval MP2 and of a second DTX status information, assigned to the time interval MP3. The first DTX status information is signaled with the "spare bit" in the "Layer 1 Header" of the SACCH, while the second DTX status information is signaled with the "UL DTX Bit", used in the "Layer 1 Header" of the SACCH to indicate the uplink DTX status related to the time interval of the downlink measurement report, i.e. MP3.

This sequence will be repeated accordingly as described above.

## Claims

1. Method for signaling DTX status information during Repeated SACCH operation in GERAN communication systems,
- wherein a mobile station measures values assigned to a serving radio cell and assigned to neighboring radio cells,
- wherein the measurement is done within successive measurement periods,
- wherein the measurements, being assigned to a measurement period with number N, are transmitted to the base station within successive measurement periods numbered N+1 and N+2 each,
- the measured values are transmitted as part of a SACCH-information block,
- wherein the mobile station determines DTX status information during the numbered measurement periods,
- wherein a first DTX status information, which is assigned to the measurement period with number N, is transmitted to the base station within the measurement periods numbered N+1 and N+2 each, and
- wherein a second DTX status information, which is assigned to a measurement period with number N-1, is also transmitted to the base station within the measurement periods numbered N+1 and N+2 each, while
- the transmission of DTX status information is done with the Layer 1 Header of the SACCH information block.

2. Method according to claim 1,
- wherein the transmission of one of the DTX status information is done with a predefined uplink DTX Bit, being part of the Layer 1 Header, and
- wherein the transmission of the other DTX status information is done with a predefined former "spare bit", being part of the Layer 1 Header.

3. Method according to claim 1 or 2, wherein the transmission to the base station is done according to standard 3GPP TS 45.008.
